# EUROPEAN PATENT APPLICATION

(11) **EP 4 451 363 A1**
(43) Date of publication of application: **23.10.2024**
(21) Application number: 22947406.9
(22) Date of filing: 24.06.2022
(51) Int. Cl.: H01M 4/133, H01M 4/587, H01M 4/62, H01M 10/0525

(54) **FAST-CHARGING NEGATIVE ELECTRODE ACTIVE MATERIAL AND PREPARATION METHOD THEREFOR, NEGATIVE ELECTRODE SHEET, SECONDARY BATTERY, AND ELECTRIC DEVICE**

(71) Applicant: Contemporary Amperex Technology (Hong Kong) Limited, Central, Central And Western District (HK)
(72) Inventor: WU, Yiyang, Ningde, Fujian 352100 (CN); BAI, Wenlong, Ningde, Fujian 352100 (CN); YE, Yonghuang, Ningde, Fujian 352100 (CN); WU, Baozhen, Ningde, Fujian 352100 (CN); WU, Kai, Ningde, Fujian 352100 (CN)
(74) Representative: Kraus & Lederer PartGmbB
(86) International application number: PCT/CN2022/101194
(87) International publication number: WO 2023/245639

(57) **Abstract**

The present application provides a fast-charging negative electrode active material and preparation method thereof, a negative electrode plate, a secondary battery, and an electrical device. The fast-charging negative electrode active material includes carbon-based material particles, a cladding layer disposed on at least a portion of the surface of the carbon-based material particles, and a ferroelectric material dispersed in the cladding layer, wherein the cladding layer includes a conductive carbon material, and at least a portion of the ferroelectric material projects from the surface of the cladding layer. The fast-charging negative electrode active materials provided in the present application have good dynamic performance, can withstand high-rate charging, and enhance the fast-charging capability of the secondary battery without sacrificing the high energy density of the secondary battery.

## Description

### TECHNICAL FIELD

The present application belongs to the technical field of battery, in particular to a fast-charging negative electrode active material and preparation method thereof, a negative electrode plate, a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, people have higher and higher requirements for the fast charging capability of secondary batteries, and the negative electrode active material, as an important part of secondary batteries, has a greater impact on the charging capability of secondary batteries. At present, graphite is one of the most commonly used negative electrode active materials for secondary batteries, but the fast charging capacity of conventional graphite is close to the bottleneck, and it cannot meet people's requirements for higher fast charging capability of secondary batteries.

### SUMMARY

An object of the present application is to provide a fast-charging negative electrode active material and preparation method thereof, a negative electrode plate, a secondary battery, and an electrical device, which can enable a secondary battery to have a high energy density and further have a substantially improved fast-charging capability.

A first aspect of the present application provides a fast-charging negative electrode active material including carbon-based material particles, a cladding layer disposed on at least a portion of the surface of the carbon-based material particles, and a ferroelectric material dispersed in the cladding layer, wherein the cladding layer comprises a conductive carbon material, and at least a portion of the ferroelectric material projects from the surface of the cladding layer.

The negative electrode active material of the present application is capable of lowering the kinetic energy potential barrier of the desolvation process, accelerating the speed of lithium ions reaching the surface of the particles of the carbon-based material, and lowering the resistance of the lithium ions to be embedded in the negative electrode on the premise that it contains fewer inactive components. The negative electrode active material of the present application is capable of increasing the rate at which embedded lithium products diffuse from the solid phase of the surface of the particles to the interior. As a result, the negative electrode active material of the present application has good dynamic properties, is capable of withstanding high-rate charging, and enhances the fast charging capability of the secondary battery without sacrificing the high energy density of the secondary battery.

In some embodiments of the present application, the cladding layer has an average thickness of H nm, the ferroelectric material has a volume-averaged particle size Dv50 of d₁ nm, and the fast-charging negative electrode active material satisfies: 0.25 ≤ H/d₁ ≤ 1.1, optionally, 0.25 ≤ H/d₁ ≤ 0.5. Thereby, it is favorable for the secondary battery to have high fast charging capability, high energy density and good cycle performance at the same time.

In some embodiments of the present application, the ferroelectric material has a volume-averaged particle size Dv50 of d₁ nm, 0 < d₁ ≤ 200, optionally, 0 < d₁ ≤ 100. Thus, less ferroelectric material can be used for the same specific surface area, thereby enabling a reduction in the energy density loss of the secondary battery.

In some embodiments of the present application, the cladding layer has an average thickness of H nm, 20 ≤ H ≤ 100, optionally, 20 ≤ H ≤ 50. Thus the secondary battery is able to simultaneously have a high fast charging capability, a high energy density, and a high cycle capacity retention rate.

In some embodiments of the present application, a mass ratio of the ferroelectric material to the carbon-based material particles is α₁, α₁ being (0.5-10): 100, optionally (1-3): 100. Thus it is favorable for the secondary battery to have both a high fast charging capability and a high energy density.

In some embodiments of the present application, a mass ratio of the cladding layer to the carbon-based material particles is α₂, α₂ being (2-10): 100, optionally (2-5): 100. Thereby it is favorable for the negative electrode active material to have a high fast charging capability while also having a high gram capacity, a high initial coulombic efficiency, and a high compaction density.

In some embodiments of the present application, a mass ratio of the ferroelectric material to the carbon-based material particles is α₁, a mass ratio of the cladding layer to the carbon-based material particles is α₂, and α₁:α₂ is from 1:6 to 4:1, optionally from 1:4 to 2:1. Thereby it is favorable for the secondary battery to have a high fast-charging capability, a high energy density, and a high cycle capacity retention rate simultaneously.

In some embodiments of the present application, the cladding layer has a graphitization degree of 45% to 80%.

In some embodiments of the present application, the conductive carbon material in the cladding layer comprises amorphous carbon, optionally hard carbon. This can further improve the fast charging capability of the secondary battery.

In some embodiments of the present application, the carbon-based material particles have a graphitization degree of 88% to 96%.

In some embodiments of the present application, the carbon-based material particles have a volume-averaged particle size Dv50 of d₂ µm, 5 ≤ d₂ ≤ 20, optionally 8 ≤ d₂ ≤ 15, thereby enabling a higher fast-charging capability of the secondary battery.

In some embodiments of the present application, the carbon-based material particles are in the form of primary particles, secondary particles or a combination thereof. Optionally, in the carbon-based material particles in the form of secondary particles, the ratio of the volume-averaged particle size Dv50 of the primary particles to the volume-averaged particle size Dv50 of the secondary particles composed of the primary particles is from 0.2 to 0.5. Thereby it is favorable for the carbon-based material particles to have good ion transport and electron transport properties while also having high structural stability.

In some embodiments of the present application, the carbon-based material particles comprise one or more selected from graphite, mesocarbon microbeads, hard carbon, and soft carbon, optionally selected from graphite. This enables the secondary battery to have high energy density and high cycle stability.

In some embodiments of the present application, the ferroelectric material has a dielectric constant of from 100 or more, optionally from 100 to 100,000, thereby enabling a better reduction of the kinetic energy potential barrier of the desolvation process, and improving the fast charging capability of the secondary battery.

In some embodiments of the present application, the ferroelectric material has a Curie temperature of 80°C or more. This enables a better reduction of the kinetic energy potential barrier of the desolvation process and improves the fast-charging capability of the secondary battery.

In some embodiments of the present application, the ferroelectric material comprises one or more selected from a perovskite structured oxide, a tungsten-bronze compound, a bismuth oxide layered compound, lithium niobate, and lithium tantalite.

In some embodiments of the present application, the fast-charging negative electrode active material has a volume-averaged particle size Dv50 of from 5 µm to 20 µm, optionally from 8 µm to 15 µm, thereby facilitating the negative electrode active material to have better ionic and electronic transport performance and fast-charging performance.

In some embodiments of the present application, the fast-charging negative electrode active material has a specific surface area of from 0.8 m²/g to 1.3 m²/g, optionally from 0.9 m²/g to 1.2 m²/g. This thereby facilitates the secondary battery to have a higher fast-charging capability.

In some embodiments of the present application, the fast-charging negative electrode active material has a powder compaction density under a force of 20,000 N of from 1.5 g/cm³ to 1.9 g/cm³, optionally from 1.5 g/cm³ to 1.7 g/cm³. Thereby it enables the secondary battery to have a higher energy density and improved cycle performance.

A second aspect of the present application provides a method for preparing a fast-charging negative electrode active material, comprising the following steps: S10, providing carbon-based material particles, a carbon source, and a ferroelectric material, optionally wherein the carbon source comprises one or more selected from asphalt, resin, and biomass material; S20, homogeneously mixing the carbon-based material particles, the carbon source, and the ferroelectric material, and subjecting to a carbonization sintering process to form a cladding layer comprising electrically conductive carbon material on at least a portion of the surface of the carbon-based material particles, wherein the ferroelectric material is dispersed in the cladding layer and wherein at least a portion of the ferroelectric material protrudes from the surface of the cladding layer.

In some embodiments of the present application, the carbonization sintering temperature in S20 is from 700°C to 1800°C, optionally from 1000°C to 1300°C.

In some embodiments of the present application, the carbonization sintering time in S20 is from 1h to 15h, optionally from 6h to 14h.

In some embodiments of the present application, the carbon-based material particles are prepared by the following method: S101, providing coke powder, and placing the coke powder into a reaction vessel; S102, graphitizing the coke powder to obtain the carbon-based material particles.

A third aspect of the present application provides a negative electrode plate comprising a negative electrode current collector and a negative electrode film provided on at least one surface of the negative electrode current collector, wherein the negative electrode film comprises a fast-charging negative electrode active material of the first aspect of the present application or a fast-charging negative electrode active material prepared by the method of the second aspect of the present application.

A fourth aspect of the present application provides a secondary battery comprising the negative electrode plate of the third aspect of the present application.

A fifth aspect of the present application provides an electrical device comprising the secondary battery of the fourth aspect of the present application.

The fast-charging negative electrode active material provided in the present application has good dynamic properties, can withstand large magnification charging, and enhances the fast-charging capability of the secondary battery without sacrificing the high energy density of the secondary battery. The electrical device of the present application comprises the secondary battery provided in the present application and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a fast-charging negative electrode active material according to an embodiment of the present application.
FIG. 2 is a schematic diagram of a secondary battery according to an embodiment of the present application.
FIG. 3 is an exploded view of a secondary battery according to the embodiment of the present application as shown in FIG. 2.
FIG. 4 is a schematic diagram of a battery module according to an embodiment of the present application.
FIG. 5 is a schematic diagram of a battery pack according to an embodiment of the present application.
FIG. 6 is an exploded view of the battery pack according to the embodiment of the present application as shown in FIG. 5.
FIG. 7 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Housing; 52. Electrode assembly; 53. Cover plate; 10. Fast-charging negative electrode active material; 101. Carbon-based material particles; 102. Cladding laver; 103. Ferroelectric material.

### DETAILED DESCRIPTION

Hereinafter, embodiments of the fast-charging negative electrode active material of the present application and preparation method thereof, the negative electrode plate, the secondary battery, and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, the term "more than one" means two or more, unless otherwise stated and specifically limited.

In the present application, a value of "about" denotes a range, indicating a range of ±10% of the value.

The key to improve the fast-charging capability of the secondary battery is to improve the performance of the negative electrode active material and the negative electrode plate. In the secondary battery charging process, using graphite as an example, the kinetic process of electrode typically includes the following steps. (1) liquid-phase mass transfer step in the electrolyte phase: solvated lithium ions in the electrolyte are diffusively transferred to the surface of graphite particles; (2) surface conversion step: solvated lithium ions are adsorbed on the surface of graphite particles during the first charging to react and form a solid electrolyte interface (SEI) membrane, solvated lithium ions are adsorbed on the surface of SEI membranes during subsequent charging, and lithium ions reach the surface of graphite particles after the desolvation process; (3) charge exchange step: lithium ions get electrons from the surface of the graphite particles and form embedded lithium products; (4) embedded lithium products solid-phase mass transfer step: embedded lithium products diffuse from the surface of the graphite particles in the solid phase to the interior to complete the charging process.

Existing studies generally agree that the solid-phase diffusion rate of the embedded lithium products is slow, so the above step (4) is considered to be a control step of the kinetic process of the negative electrode, and then existing studies mainly focus on how to increase the solid-phase diffusion rate of the embedded lithium products and shorten the solid-phase diffusion distance. For example, in order to enhance the fast-charging capability of graphite, the existing technology adopts the following practices: (1) etching pores on the graphite surface to increase the surface active sites and lithium ion embedded channels, thereby shortening the lithium ion diffusion distance; (2) using amorphous carbon to cover graphite to increase the layer spacing of the graphite surface layer and increase the lithium ion diffusion rate. However, the above methods have limited effect on the enhancement of the fast-charging capability of the secondary battery.

The inventors of the present application have studied in detail the electrode kinetic process during charging of the secondary battery, and found that an important factor affecting the enhancement of the fast-charging capability of graphite is the effect of the solvation of the electrolyte. The electrolyte is usually obtained by homogeneously mixing lithium salts and solvent molecules, etc., whereby the electrolyte usually includes three components, namely, solvent molecules, anions, and solvated lithium ions. Before the lithium ions reach the surface of the graphite particles and become embedded in the graphite particles during the charging process, the solvated lithium ions need to undergo a desolvation process in order to be freed from the solvent molecules, but there is a high kinetic energy potential barrier to the process, e.g., from about 50 kJ/mol to 70 kJ/mol.

In addition, the generation of "lithium dendrites" and "dead lithium" is another important factor affecting the improvement of the fast-charging capability of secondary batteries. During the charging process of the secondary battery, when there is insufficient space for embedding lithium in the negative electrode, the resistance of lithium ions to be embedded in the negative electrode is too great, and lithium ions are removed from the positive electrode too quickly but cannot be embedded in the negative electrode in the same amount and other anomalies, the lithium ions that cannot be embedded in the negative electrode can only obtain electrons on the surface of the negative electrode, thereby forming silver-white lithium metal monomers, i.e., "lithium dendrites." The formation of lithium dendrites not only reduces the performance of the secondary battery, such as shortening the cycle life, but also seriously forms a sharp shape that pierces the separator and leads to a short circuit in the battery, which may cause combustion, explosion and other catastrophic consequences. At the same time, the continuously deposited lithium metal monomers will further fall off from the surface of the negative electrode, resulting in the formation of "dead lithium" that cannot continue to participate in the reaction, leading to a reduction in the energy density of the secondary battery.

The inventors of the present application further found in the study of the electrode's dynamics during the charging of the secondary battery, due to the high kinetic energy potential barrier of the desolvation process, it limits the speed of lithium ions to reach the surface of the graphite particles, and increases the resistance of lithium ions to be embedded in the negative electrode, and in particular, it is more likely to induce "lithium dendrites" and "dead lithium" when the secondary battery is fast charged at a high rate.

The inventors of the present application have proposed, after extensive research, a new type of fast-charging negative electrode active material, which can enable secondary batteries to have greatly improved fast-charging capability on the premise of high energy density.

### Negative electrode active material

Specifically, a first aspect according to an embodiment of the present application provides a fast-charging negative electrode active material.

The fast-charging negative electrode active material comprises carbon-based material particles, a cladding layer disposed on at least a portion of the surface of the carbon-based material particles, and a ferroelectric material dispersed in the cladding layer, wherein the cladding layer comprises a conductive carbon material, and at least a portion of the ferroelectric material projects from the surface of the cladding layer.

The negative electrode active materials of the present application have good dynamic properties that enhance the fast-charging capability of the secondary battery without sacrificing the high energy density of the secondary battery. Although the mechanism is not clear, the inventors speculate that possible reasons include the following.

[0059] First, the negative electrode active material of the present application comprises a ferroelectric material on the surface, which has a spontaneous polarization strength, and the spontaneous polarization strength can be reversed when the external electric field is reversed, thereby reducing the kinetic energy potential barrier of the desolvation process of the solvated lithium ions, accelerating the speed of the lithium ions to reach the surface of the carbon-based material particles, and lowering the resistance of the lithium ions to be embedded in the negative electrode. As a result, the negative electrode active material of the present application has good dynamic properties and is capable of withstanding high-rate charging, thereby being able to enhance the fast-charging capability of the secondary battery.

Second, in the negative electrode active material of the present application, at least a portion of the ferroelectric material protrudes from the surface of the cladding layer, whereby the portion of the ferroelectric material can contact both the electrolyte directly and the carbon-based material particles. The surface of the ferroelectric material in contact with the electrolyte is induced to be negatively charged, and the surface in contact with the carbon-based material particles is induced to be positively charged, which can better reduce the kinetic energy potential barrier of the desolvation process, accelerate the speed of lithium ions to reach the surface of the carbon-based material particles, and reduce the resistance of the lithium ions to be embedded in the negative electrode, so that the negative electrode active material of the present application has a good dynamic performance and can withstand a high-rate charging, thus improving the fast-charging capability of the secondary battery.

Third, as the charging process proceeds, the lithium embedded in the negative electrode gradually increases, and the activation energy that needs to be overcome when the lithium-embedded products diffuse from the solid phase on the surface of the particles to the interior increases, and the solid phase diffusion becomes more difficult. In the negative electrode active material of the present application, the cladding layer includes a conductive carbon material with good electrical conductivity, thereby increasing the rate of solid-phase diffusion of the embedded lithium products from the surface of the particles to the interior, and enabling the negative electrode active material to have good dynamic properties.

Fourth, in the negative electrode active material of the present application, the conductive carbon material in the cladding layer and the carbon-based material particles are active components that can contribute to the capacity, while the ferroelectric material is an inactive component that cannot contribute to the capacity, but can reduce the kinetic energy potential barrier of the desolvation process, accelerate the speed of lithium ions to reach the surface of the carbon-based material particles, and reduce the resistance of the lithium ions to be embedded in the negative electrode. The negative electrode active material of the present application disperses the ferroelectric material in the cladding layer and further causes at least a portion of the ferroelectric material to protrude from the surface of the cladding layer, thereby exposing more surface area of the ferroelectric material and more contact area with the electrolyte, and thereby realizing the effect of lowering the kinetic energy potential barrier of the desolvation process when the amount is small. As a result, secondary batteries utilizing the negative electrode active materials of the present application can have high fast-charging capability without sacrificing high energy density.

The negative electrode active material of the present application is capable of lowering the kinetic energy potential barrier of the desolvation process, accelerating the speed of lithium ions reaching the surface of the particles of the carbon-based material, and lowering the resistance of the lithium ions to be embedded in the negative electrode on the premise that the negative electrode active material of the present application contains less inactive components; the negative electrode active material of the present application is further capable of increasing the rate of the embedded lithium products diffusing from the surface of the particles in the solid phase to the interior. As a result, the negative electrode active material of the present application has good dynamic properties, is capable of withstanding high-rate charging, and enhances the fast-charging capability of the secondary battery without sacrificing the high energy density of the secondary battery.

Optionally, in some embodiments, all of the ferroelectric materials protrude from the surface of the cladding layer. The resulting greater exposed surface area of the ferroelectric materials and increased contact area with the electrolyte enables the effect of lowering the kinetic energy potential barrier of the desolvation process to be achieved at a lower amount.

In some embodiments, the cladding layer has an average thickness of H nm, the ferroelectric material has a volume-averaged particle size Dv50 of d₁ nm, and the fast-charging negative electrode active material satisfies: 0.25 ≤ H/d₁ ≤ 1.1. When H/d₁ is less than 1.1, it enables at least a portion of the ferroelectric material to protrude from the surface of the cladding layer, thereby increasing the contact area with the electrolyte so as to reduce the kinetic energy potential barrier of the desolvation process at a relatively small amount thereof. When H/d₁ is less than 0.25, the contact area between the ferroelectric material and the electrolyte is larger, which can better reduce the kinetic energy potential barrier of the desolvation process, but at this time, the negative electrode active material is not easy to be compacted as a whole, resulting in that the ionic conductivity and electronic conductivity of the negative electrode plate may be poorer, which may affect the fast-charging capability and energy density of the secondary battery. The fast-charging capability, energy density and cycle performance of the battery may be affected. Therefore, when H/d1 is in the suitable range, it is favorable for the secondary battery to have a high fast-charging capability, a high energy density, and a good cycle performance at the same time. Optionally, 0.25 ≤ H/d1 ≤ 1.0, 0.25 ≤ H/d1 ≤ 0.9, 0.25 ≤ H/d1 ≤ 0.8, 0.25 ≤ H/d1 ≤ 0.7, 0.25 ≤ H/d1 ≤ 0.6, 0.25 ≤ H/d1 ≤ 0.5, 0.25 ≤ H/d1 ≤ 0.4, 0.30 ≤ H/d1 ≤ 0.9, 0.30 ≤ H/d1 ≤ 0.8. 0.30 ≤ H/d1 ≤ 0.7, 0.30 ≤ H/d1 ≤ 0.6, 0.30 ≤ H/d1 ≤ 0.5, 0.30 ≤ H/d1 ≤ 0.4, 0.35 ≤ H/d1 ≤ 0.9, 0.35 ≤ H/d1 ≤ 0.8, 0.35 ≤ H/d1 ≤ 0.7, 0.35 ≤ H/d₁ ≤ 0.6, or 0.35 ≤ H/d₁ ≤ 0.5.

In some embodiments, the ferroelectric material has a volume-averaged particle size Dv50 of d₁ nm, 0 < d₁ ≤ 200. Optionally, 0 < d₁ ≤ 180, 0 < d₁ ≤ 160, 0 < d₁ ≤ 140, 0 < d₁ ≤ 120, 0 < d₁ ≤ 100, 0 < d₁ ≤ 80, 0 < d₁ ≤ 60, 0 < d₁ ≤ 40, 20 ≤ d₁ ≤ 180, 20 ≤ d₁ ≤ 160, 20 ≤ d₁ ≤ 140, 20 ≤ d₁ ≤ 120, 20 ≤ d₁ ≤ 100, 20 ≤ d₁ ≤ 80, 20 ≤ d₁ ≤ 60, 20 ≤ d₁ ≤ 40, 30 ≤ d₁ ≤ 180, 30 ≤ d₁ ≤ 160, 30 ≤ d₁ ≤ 140, 30 ≤ d₁ ≤ 120, 30 ≤ d₁ ≤ 100, 30 ≤ d₁ ≤ 80, or 30 ≤ d₁ ≤ 60. The smaller the volume-averaged particle size Dv50 of the ferroelectric material is, the larger its specific surface area will be, so that less ferroelectric material can be used for the same specific surface area, thereby reducing the energy density loss of the secondary battery.

In some embodiments, the cladding layer has an average thickness of H nm, 20 ≤ H ≤ 100. The cladding layer comprises conductive carbon material with good electrical conductivity, whereby the rate of diffusion of embedded lithium products from the solid phase on the surface of the particles to the interior can be increased, resulting in a good dynamic performance of the negative electrode active material. Therefore, when the thickness of the cladding layer is thicker, the fast-charging capability of the secondary battery can be improved, but the conductive carbon material in the cladding layer has more pores, more surface defects, and a larger specific surface area, so that when the thickness of the cladding layer is thicker, there are more interfacial side reactions between the negative electrode active material and the electrolyte, which can easily result in a lower initial coulombic efficiency of the negative electrode active material and a faster capacity degradation. Therefore, when the average thickness of the cladding layer is within the suitable range, it is favorable for the negative electrode active material to have a high fast-charging capacity while also having a high specific capacity and a high initial coulombic efficiency, and thus the secondary battery can have a high fast-charging capability, a high energy density, and a high cycle capacity retention rate at the same time. Optionally, 20 ≤ H ≤ 95, 20 ≤ H ≤ 90, 20 ≤ H ≤ 85, 20 ≤ H ≤ 80, 20 ≤ H ≤ 75, 20 ≤ H ≤ 70, 20 ≤ H ≤ 65, 20 ≤ H ≤ 60, 20 ≤ H ≤ 55, 20 ≤ H ≤ 50, 20 ≤ H ≤ 45, or 20 ≤ H ≤ 40.

Optionally, in some embodiments, the ferroelectric material has a dielectric constant of 100 or more. When the ferroelectric material has a high dielectric constant, its surface can provide a new path for the desolvation process of the solvated lithium ions, and the higher the dielectric constant of the ferroelectric material is, the better the effect it plays in lowering the kinetic energy potential barrier of the desolvation process, but its effect will not always continue to increase, and at the same time, the higher the dielectric constant is, the higher the requirements for the preparation process of the ferroelectric material will be, which also increases the production costs. Optionally, in some embodiments, the ferroelectric material may have a dielectric constant of from 100 to 100,000, for example from 100 to 50,000, from 100 to 25,000, from 100 to 10,000, from 100 to 5,000, from 100 to 4,000, from 100 to 3,000, from 100 to 2,000, from 100 to 1,000, from 100 to 500, from 150 to 50,000, from 150 to 25,000, from 150 to 10,000, from 150 to 5,000, from 150 to 4,000, from 150 to 3,000, from 150 to 2,000, from 150 to 1,000, from 150 to 500, from 200 to 50,000, from 200 to 25,000, from 200 to 10,000, from 200 to 5,000, from 200 to 4,000, from 200 to 3000, from 200 to 2000, or from 200 to 1000.

In the present application, the dielectric constant of the ferroelectric material refers to the dielectric constant at room temperature (25 ± 5°C), which has a meaning well known in the art and can be tested with instruments and methods known in the art. For example, the ferroelectric material can be prepared as a circular specimen and then tested using an LCR tester for capacitance C and calculated according to the formula: dielectric constant ε=(C×d)/(ε₀×A), in which C denotes the capacitance in farad (F); d denotes the thickness of the specimen in cm; A denotes the area of the specimen in cm²; and ε₀ denotes the vacuum dielectric constant, with ε₀ = 8.854×10⁻¹⁴ F/cm. In the present application, the test conditions may be as follows: 1 KHz, 1.0 V, 25 ± 5°C. The testing standard may be based on GB/T 11297.11-2015. Reference may be made to Chinese patent application CN114217139A when preparing the specimen.

In some embodiments, optionally, the dielectric constant of the ferroelectric material is higher than that of the electrolyte, whereby the kinetic energy potential barrier of the desolvation process can be better reduced to improve the fast-charging capability of the secondary battery.

In some embodiments, the ferroelectric material is insoluble in water, has a high Curie temperature, e.g., typically above 80°C. This enables better utilization of the effect of the ferroelectric material during the use of the secondary battery.

Optionally, in some embodiments, the ferroelectric material comprises one or more selected from a perovskite structured oxide, a tungsten-bronze compound, a bismuth oxide layered compound, lithium niobate (LiNbOs), and lithium tantalite (LiTaOs). More optionally, the ferroelectric material is selected from a perovskite structured oxide.

Optionally, the perovskite structured oxide has a molecular formula Ba₁₋ₓAₓTi_{1-y}B_{y}O₃. A comprises one or more selected from Pb, Sr, Ca, K, Na, and Cd, and B comprises one or more selected from Sn, Hf, Zr, Ce, Nb, and Th, with 0 ≤ x ≤ 1 and 0 ≤ y ≤ 1. For example, the perovskite structured oxide may comprise one or more selected from BaTiOs, Ba₁₋ₓ₁Srₓ₁TiO₃ (0 ≤ x1 ≤ 1), SrTiO₃, PbTiO₃, PbZr_{y1}Ti_{1-y1}O₃ (0 ≤ y1 ≤ 1), BaZr_{y2}Ti_{1-y2}O₃ (0 < y2 < 1), KNbO₃, and NaNbO₃.

Optionally, the tungsten-bronze compound may have a molecular formula MzWOs. M comprises one or more selected from Na, K, Rb, and Cs, with 0 < z < 1. For example, the tungsten-bronze compound may comprise one or more selected from Na_{z1}WO₃ (0 < z1 < 1), and K_{z2}WO₃ (0 < z2 < 1).

Optionally, the bismuth oxide layered compound has a molecular formula (Bi₂O₂)(Cₙ₋₁DₙO₃ₙ₊₁). C comprises one or more selected from Na, K, Ba, Sr, Pb, Ca, Ln, and Bi, and D comprises one or more selected from Zr, Cr, Nb, Ta, Mo, W, Fe, Ti, and V, with 2 ≤ n ≤ 5. For example, the bismuth oxide layered compound may be one or more of SrBi₂Nb₂O₉, SrBi₂Ta₂O₉, SrBi₂Nb₂O₉, and Bi₄Ti₃O₁₂.

In some embodiments, the mass ratio of the ferroelectric material to the carbon-based material particles is α₁, α₁ being (0.5-10):100. Optionally, α₁ is (0.5-9):100, (0.5-8):100, (0.5-7):100, (0.5-6):100, (0.5-5):100, (0.5-4): 100, (0.5-3):100, (1-9): 100, (1-8): 100, (1-7): 100, (1-6):100, (1-5):100, (1-4): 100 or (1-3):100.

When α₁ is in the suitable range, it is favorable for the secondary battery to have both a high fast-charging capability and a high energy density. And it is also effective to avoid the following situations: when α₁ is larger, the content of inactive components in the particles of the negative electrode active material increases and the content of active components decreases, whereby the secondary battery may lose more energy density; when α₁ is larger, the ferroelectric material may further cover more surfaces of the negative electrode active material, whereby the active sites on the surface of the negative electrode active material are reduced, whereby the fast-charging capability of the secondary battery may also result in the deterioration of the fast-charging capability and the cycle performance; when α₁ is small, the ferroelectric material content is small, and its effect of lowering the kinetic energy potential barrier of the desolvation process may not be significant, and thus may not be conducive to enhancing the fast-charging capability of the secondary battery.

In some embodiments, the mass ratio of the cladding layer to the carbon-based material particles is α₂, with α₂ being (2-10):100. Optionally, α₂ is (2-9):100, (2-8):100, (2-7):100, (2-6):100, (2-5):100, (3-9): 100, (3-8): 100, (3-7): 100, (3-6):100 or (3-5):100.

When α₂ is in the suitable range, it is favorable for the negative electrode active material to have a high fast-charging capability while also having a high specific capacity, a high initial coulombic efficiency, and a high compaction density, and thus the secondary battery is able to have a high fast-charging capability, a high energy density, and a high cycle capacity retention rate at the same time. And it can also effectively avoid the following situations: when α₂ is larger, the cladding layer is thicker and the content of conductive carbon material is higher, due to the pore space of the conductive carbon material is larger and the specific surface area is larger, which leads to more interfacial side reactions between the negative electrode active material and the electrolyte; at the same time, when α₂ is larger, the surface topography of the conductive carbon material is rough and the surface defects are larger, which makes it difficult for the negative electrode active material to be compacted, and the surface defect structure is unstable due to the conductive carbon material, which makes the negative electrode active material not easy to be compacted. In addition, due to the unstable structure of the surface defects of the conductive carbon material, it is also easy to cause the initial coulombic efficiency of the negative electrode active material to be lower and the capacity to decay faster, which in turn may further make the capacity and the cycle performance of the secondary battery to be worse; when α₂ is smaller, it is unfavorable for the lithium ions to rapidly intercalate and deintercalate, which may be unfavorable for improving the fast-charging capability of the secondary battery.

In some embodiments, the mass ratio of the ferroelectric material to the carbon-based material particles is α₁, the mass ratio of the cladding layer to the carbon-based material particles is α₂, and α₁:α₂ is from 1:6 to 4:1, optionally from 1:4 to 2:1.

When α₁:α₂ is in the suitable range, it is favorable for the negative electrode active material to have a high fast-charging capability while also having a high specific capacity, a high initial coulombic efficiency, and a high compaction density, and thus the secondary battery can have a high fast-charging capability, a high energy density, and a high cycle capacity retention rate at the same time. In addition, it can also effectively avoid the following situations: when α₁:α₂ is larger, the content of inactive components in the negative electrode active material particles increases, and the content of active components decreases, whereby the secondary battery may lose more energy density, and at the same time it is also unfavorable to the fast intercalation and deintercalation of lithium ions; when α₁:α₂ is smaller, the content of ferroelectric material is smaller, and its effect of decreasing kinetic energy potential barriers of the desolvation process may be less significant, possibly resulting in poorer fast-charging capability of the secondary battery, and also probably resulting in lower the initial coulombic efficiency and faster capacity decay of the negative electrode active material.

The cladding layer comprises a conductive carbon material. Optionally, the conductive carbon material comprises amorphous carbon. Amorphous carbon refers to a transition state carbon material with a low degree of graphitization crystallization and an approximately amorphous morphology (or without a fixed shape and periodic structural pattern), which can be obtained by carbonization and sintering treatment of a carbon source (e.g., asphalt, resin, biomass material, etc.). The amorphous carbon has a larger layer spacing, and it does not cause volume contraction and expansion effects during the intercalation and deintercalation of lithium ion, whereby its crystal structure is more stable, enabling the negative electrode active material to have good dynamic performance and withstand a high-rate charging, and thus being able to improve the fast-charging capability of the secondary battery. The amorphous carbon comprises soft carbon, hard carbon, or a combination thereof. Optionally, in some embodiments, the conductive carbon material comprises hard carbon, whereby the fast-charging capability of the secondary battery can be further improved.

In some embodiments, the carbon-based material particles comprise one or more selected from graphite (e.g., artificial graphite, natural graphite, graphite oxide, etc.), mesocarbon microbeads, hard carbon, and soft carbon, optionally selected from graphite. Graphite has the advantage of stable cycle performance and high specific capacity, thereby also enabling the secondary battery to have high energy density and high cycle stability.

In some embodiments, the cladding layer has a graphitization degree of from 45% to 80%.

In some embodiments, the carbon-based material particles have a graphitization degree of from 88% to 96%.

The inventors have found that when the cladding layer and the carbon-based material particles further satisfy a graphitization degree within the above range, it helps the crystalline structure of the cladding layer and the carbon-based material particles to be reasonably matched, whereby the solid-phase diffusion rate of lithium ions can be effectively increased, thereby improving the fast-charging capability and cycle performance of the secondary battery.

In some embodiments, the carbon-based material particles have a morphology of primary particles, secondary particles, or a combination thereof. The secondary particles are typically obtained by agglomeration of the primary particles. Optionally, in the carbon-based material particles having a morphology of secondary particles, the ratio of the volume average particle size Dv50 of the primary particles to the volume average particle size Dv50 of the secondary particles composed of the primary particles is from 0.2 to 0.5. When the carbon-based material particles are of secondary particle morphology and the ratio of the volume average particle size Dv50 of the primary particles to the volume average particle size Dv50 of the secondary particles composed of the primary particles is adjusted to be within the suitable range, it is beneficial for the carbon-based material particles to have a better degree of secondary granularity, thereby providing good ion transport and electron transport properties along with high structural stability.

In some embodiments, the volume-averaged particle size Dv50 of the carbon-based material particles is d₂ µm, with 5 ≤ d₂ ≤ 20, optionally 8 ≤ d₂ ≤ 15. When the volume-averaged particle size Dv50 of the carbon-based material particles is in the suitable range, it is favorable for the negative electrode active material of the present application to have a higher electrochemical activity, whereby the secondary battery can be made to have a higher fast-charging capability. In addition it can also effectively avoid the following situations: when the volume average particle size Dv50 of the carbon-based material particles is smaller, the specific capacity and the compaction density of the negative electrode active material are lower, thereby unfavorable to the design of the high energy density battery; at the same time, when the volume average particle size Dv50 of the carbon-based material particles is smaller, it has a larger specific surface area and a higher reaction activity, thereby resulting in that an interfacial side reaction between the negative electrode active material and the electrolyte may increase, which in turn leads to an increase in irreversible consumption of active lithium ions, and the capacity exertion and energy density of the secondary battery may deteriorate; when the volume-averaged particle size Dv50 of the carbon-based material particles is larger, the active sites on the surface of the particles are reduced, and the path for the embedded lithium products to diffuse to the interior from the solid phase on the surface of the particles is longer, which may be unfavorable to the enhancement of the fast-charging capability of the secondary battery.

In some embodiments, the fast-charging negative electrode active material has a volume-averaged particle size Dv50 of from 5 µm to 20 µm, optionally from 8 µm to 15 µm. By adjusting the volume-averaged particle size Dv50 of the negative electrode active material to be in the suitable range, it is favorable for the negative electrode active material to have better ion transfer and electron transfer performance and fast-charging performance, as well as to have a higher powder compaction density.

In some embodiments, the fast-charging negative electrode active material has a specific surface area of from 0.8 m²/g to 1.3 m²/g, optionally from 0.9 m²/g to 1.2 m²/g. By adjusting the specific surface area of the negative electrode active material in the suitable range, it can reduce the interfacial side reaction between the negative electrode plate using the same and the electrolyte, and at the same time also enable the negative electrode plate using the same to have a suitable electrochemical reaction activity, thereby enabling the secondary battery to have a higher fast-charging capability.

In some embodiments, the fast-charging negative electrode active material has a powder compaction density under a force of 20,000 N of from 1.5 g/cm³ to 1.9 g/cm³, optionally from 1.5 g/cm³ to 1.7 g/cm³. By adjusting the powder compaction density of the negative electrode active material in the suitable range, it can enable the negative electrode film to have a higher compaction density, and thus the secondary battery to have a higher energy density. In addition, by adjusting the powder compaction density of the negative electrode active material within the suitable range, it is also possible to make the negative electrode film have a stronger ability to maintain the pore structure during the cycling process, whereby the negative electrode plate has a better electrolyte wettability, which can better enhance the cycle performance of the secondary battery.

In the present application, the average thickness of the cladding layer has a meaning known in the art, and can be tested with instruments and methods known in the art, for example, a transmission electron microscope can be used to obtain a TEM (Transmission Electron Microscope) picture, and then a plurality of (e.g., more than 30) different positions on the TEM picture are measured for the thicknesses, taking the average value thereof as the average thickness of the cladding layer.

In the present application, the volume-averaged particle size Dv50 of the material has a meaning known in the art, which indicates the particle size corresponding to a cumulative volume distribution percentage of the material that reaches 50%, and can be tested by instruments and methods known in the art. For example, it can be conveniently tested using a laser particle size analyzer, such as the Mastersizer 2000E laser particle size analyzer from Malvern Instruments Ltd. of the United Kingdom, with reference to the GB/T 19077-2016 (Particle size distribution-laser diffraction method).

For the purposes of the present application, the graphitization of a material is known in the art and can be tested using instruments and methods known in the art. For example, an X-ray diffractometer (e.g., Bruker D8 Discover) can be used to conduct the test, and the test can be referred to JIS K 0131-1996, JB/T 4220-2011, to obtain d₀₀₂, and then the graphitization degree of the material can be calculated according to the formula g=(0.344-d₀₀₂)/(0.344-0.3354)×100%. In the above formula, d₀₀₂ is the layer spacing of the (002) crystal plane in the crystal structure of the material expressed in nanometers (nm).

In the present application, the specific surface area of the material is known in the art and can be tested by instruments and methods known in the art. For example, For example, according to GB/T 19587-2017 (Determination of the specific surface area of solids by gas adsorption using the BET method), analysis of the specific surface area by the nitrogen adsorption can be used, and the specific surface area can be calculated by the BET (Brunauer Emmett Teller) method, in which the analysis of the specific surface area by the nitrogen adsorption can be carried out by a specific surface and pore size distribution analyzer (Type: Tri-Star 3020) from Micromeritics, USA.

In the present application, the powder compaction density of the material is known in the art, and can be tested by instruments and methods known in the art. For example, it can be tested by an electronic pressure tester (e.g., type UTM7305) with reference to standard GB/T24533-2009. The exemplary test method is as follows: weigh 1 g of material, add it to a mold with a bottom area of 1.327 cm², pressurize it to 2000 kg (equivalent to 20000 N), hold the pressure for 30 s, and then unpressurize it and hold it for 10 s, and then record and calculate to obtain the powder compaction density of the material under a force of 20000N.

It is to be noted that the various parameter tests described above for the negative electrode active material can be performed by sampling and testing before coating, or sampling and testing from the negative electrode film after cold pressing. When the test sample of the negative electrode active material is taken from the negative electrode film after cold pressing, as an example, the sampling can be performed as follows: arbitrarily selecting a negative electrode film after cold pressing, sampling the negative electrode active material (for example, blade scraping powder sampling can be used); placing the above-collected powder of the negative electrode active material in deionized water, and then carrying out filtration and drying; then sintering the dried negative electrode active material under a certain temperature and time (e.g., 400°C, 2h), removing the binder and conductive agent, i.e., obtaining the negative electrode active material test sample.

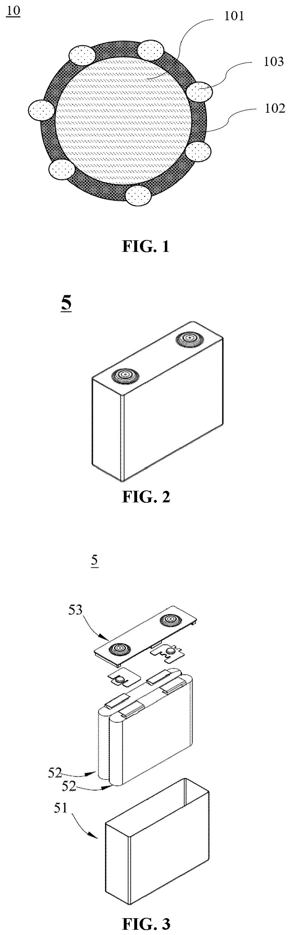

The fast-charging negative electrode active material of the present application is described below in conjunction with the accompanying drawings. FIG. 1 is a schematic diagram of a fast-charging negative electrode active material 10 according to an embodiment of the present application. As shown in FIG. 1, the fast-charging negative electrode active material 10 includes carbon-based material particles 101, a cladding layer 102 disposed on at least a portion of the surface of the carbon-based material particles 101, and a ferroelectric material 103 dispersed in the cladding layer 102, the cladding layer 102 comprising a conductive carbon material and at least a portion of the ferroelectric material 103 projecting from the surface of the cladding layer 102.

### Preparation Method

The second aspect of the embodiments of the present application provides a method for preparing the fast-charging negative electrode active material of the first aspect of the present application, comprising the following steps: S10, providing carbon-based material particles, a carbon source, and a ferroelectric material; S20, homogeneously mixing the carbon-based material particles, the carbon source, and the ferroelectric material, and subjecting to a carbonization sintering process to form a cladding layer comprising conductive carbon material on at least a portion of the surface of the carbon-based material particles, wherein the ferroelectric material is dispersed in the cladding layer and wherein at least a portion of the ferroelectric material protrudes from the surface of the cladding layer.

For the purposes of the present application, "carbon source" means a compound capable of forming a conductive carbon material. The carbon source comprises one or more selected from an organic carbon source, and an inorganic carbon source. Optionally, the carbon source is an organic carbon source.

Optionally, in some embodiments, the carbon source comprises one or more selected from a asphalt, a resin, and a biomass material. As an example, the asphalt comprises one or more selected from coal asphalt, and petroleum asphalt, optionally petroleum asphalt. As an example, the resin comprises one or more selected from phenolic resin, and epoxy resin. As an example, the biomass material is a material obtained by derivation from living organisms such as animals, plants, and microorganisms, and consists primarily of an organic polymeric substance, which is chemically composed primarily of the elements carbon, hydrogen, and oxygen, and which may be, for example, polysaccharides (e.g., starch, sucrose polymers, glucose polymers, cellulose, and the like).

Optionally, in some embodiments, the carbonization sintering temperature in S20 is from 700°C to 1800°C, more optionally from 1000°C to 1300°C.

Optionally, in some embodiments, the carbonization sintering time in S20 is from 1h to 15h, optionally from 6h to 14h.

In S20, by controlling the carbonization sintering temperature and the carbonization sintering time within the above ranges, the carbon source can be carbonized and a cladding layer comprising conductive carbon material can be formed on at least a portion of the surface of the particles of the carbon-based material, and the cladding layer can have a suitable thickness and graphitization degree.

In some embodiments, the carbon-based material particles may be a commercially available product, or optionally, are prepared by the following steps: s101, providing a coke powder, placing the coke powder into a reaction vessel; s102, graphitizing the coke powder to obtain carbon-based material particles.

In some embodiments, the coke powder may be a commercially available product, or optionally, is prepared by the following steps: S1011, subjecting a coke raw material to coking treatment to obtain coke; S1012, crushing, shaping, and grading the obtained coke to obtain coke powder.

In the present application, "coke raw material" refers to a component that can be treated to obtain "coke", i.e., a raw material used to prepare coke; "coke" refers to a product obtained from the coke raw material by coking treatment; and "coke powder" refers to a product obtained from the coke raw material by coking treatment. "Coke powder" and "coke" are identical in composition, with the difference that "coke powder" refers to "coke" in the form of powder with a certain particle size, i.e., "coke powder" is obtained after "coke" has been crushed or the like.

Optionally, the coke raw material may comprise one or more of petroleum-based material, and coal-based material. As an example, the petroleum-based material comprises one or more of heavy oil, residual oil, and depressurized residual oil, and the coal-based material comprises primarily coal asphalt. Heavy oil, residual oil, and depressurized residual oil are typically produced in a petroleum refining process, and coal asphalt is typically produced in a coal dry distillation process.

Optionally, the coke obtained in S1011 comprises one or more selected from petroleum-based non-needle coke, petroleum-based needle coke, coal-based non-needle coke, and coal-based needle coke. More optionally, the coke obtained in S1011 comprises one or more of petroleum-based non-needle coke (e.g., petroleum-based calcined coke, petroleum-based raw coke), and petroleum-based needle coke. In particular, the coke obtained in S1011 is petroleum-based raw coke. The use of a suitable coke can enable the prepared carbon-based material particles to have a suitable number of end faces and defects, and thus to have better ion transport and electron transport properties as well as higher structural stability, whereby the fast-charging capability and cycle performance of the secondary battery can be improved.

Optionally, the coking treatment of the coke raw material in S1011 is carried out in a delayed coking unit. The delayed coking unit includes a heating furnace and a coke furnace, and the delayed coking process means that the coke raw material is first rapidly heated in the heating furnace to a desired coking treatment temperature, and then enters the coke furnace, and undergoes a process of preheating and cold coking in the coke furnace to generate coke.

Optionally, the resulting coke can be crushed in S1012 using equipment and methods known in the art, such as using a jet mill, a mechanical mill, a roller mill, or other crushing equipment.

The morphology of the resulting coke powder after crushing may include one or more of lumpy, spherical, and spheroidal shapes. After the crushing is completed, the coke powder is then shaped in order to polish the corners of the coke powder. The greater the degree of shaping is, the closer the powder particles are to a spherical shape, which increases the number of active sites on the surface of the particles of the carbon-based material. The shaping treatment also facilitates the subsequent granulation process by providing a secondary particle portion of the resulting carbon-based material particles with high structural stability. The shaping treatment may be performed using equipment and methods known in the art, such as a shaper or other shaping equipment.

The crushing and shaping process often produces a high number of excessively small particles and sometimes excessively large particles, and thus a grading process can be performed as needed to remove the excessively small and large particles from the powder. The grading treatment results in a coke powder having a better particle size distribution for subsequent granulation processes. The grading treatment can be performed using equipment and methods known in the art, such as grading screens, gravity classifiers, centrifugal classifiers, and the like.

Optionally, in some embodiments, S101 further comprises: adding a binder to the reaction vessel, mixing the binder uniformly with the coke powder for granulation. The addition of the binder enables the resulting carbon-based material particles to have a better degree of secondary particles, which is conducive to improving the ion transport and electron transport properties of the negative electrode active material while also enabling it to have a high degree of structural stability.

Optionally, the binder has a mass content of from 3% to 12%, more optionally from 5% to 8%, based on the total mass of the coke powder. The binder content is in the suitable range to avoid excessive agglomeration of the particles.

Optionally, the binder comprises one or more selected from coal asphalt, petroleum asphalt, intermediate phase asphalt, phenolic resin, epoxy resin, and petroleum resin.

The granulation process may be performed using equipment and methods known in the art, such as a granulator. Granulators typically include an agitated reactor and a module for temperature control of the reactor. The degree of granulation and the structural strength of the particles can be regulated by regulating the stirring speed, the heating speed, the granulation temperature, the cooling speed, etc., during the granulation process, which can result in the volume-averaged particle size, Dv50, of the finally prepared carbon-based material particles to be within a desired range.

Optionally, in some embodiments, the graphitization treatment temperature in S102 can be from 2400°C to 3200°C, more optionally from 2800°C to 3200°C, or from 2900°C to 3100°C.

Optionally, in some embodiments, the graphitization treatment time in S102 may be from 20h to 48h.

The graphitization treatment enables the carbon-based material particles to have a suitable degree of graphitization to improve the specific capacity of the negative electrode active material; the graphitization treatment also enables the carbon-based material particles to have a small lattice expansion rate to improve structural stability; and the graphitization treatment further effectively eliminates bulk phase structural defects in the carbon-based material particles to improve the cycling stability of the secondary battery.

The graphitization treatment may be carried out using equipment and methods known in the art, such as a graphitization furnace, in particular an Atchison graphitization furnace. At the end of the graphitization treatment, a small amount of oversized particles formed by agglomeration during the graphitization treatment may also be removed by sieving, which prevents the oversized particles from affecting the processing properties of the resulting negative electrode active material, such as the stability of the negative electrode slurry, the coating properties, and the like.

In some embodiments, the method for preparing the fast-charging negative electrode active material comprises the following steps: placing a coke powder and a binder into a reaction vessel and mixing them uniformly and then granulating them; graphitizing the obtained granulated product to obtain carbon-based material particles; mixing the obtained carbon-based material particles uniformly with a carbon source and a ferroelectric material, and sintering by carbonization to form a cladding layer comprising a conductive carbon material on at least a portion of the surface of the carbon-based material particles, wherein the ferroelectric material is dispersed in the cladding layer and at least a portion of the ferroelectric material protrudes from the surface of the cladding layer.

The method for preparing the fast-charging negative electrode active material of the present application is simple, inexpensive to produce, and compatible with current processes for preparing carbon-based material particles, in particular artificial graphite, thereby eliminating the need for additional production equipment and process steps. When the fast-charging negative electrode active material is prepared by the method of the present application, the ferroelectric material is less likely to agglomerate, thereby enabling the desolvation effect of the solvated lithium ions to be applied to the entire negative electrode active material, which facilitates higher fast-charging capability and longer service life of the anode active material.

Some of the raw materials used in the preparation method of the fast-charging negative electrode active material of the present application and their contents and the like can be referred to the fast-charging negative electrode active material according to the first aspect of the embodiments of the present application, and will not be repeated herein.

### Negative electrode plate

The third aspect of the present application provides a negative electrode plate. The negative electrode plate comprises a negative electrode current collector and a negative electrode film provided on at least one surface of the negative electrode current collector, wherein the negative electrode film comprises a fast-charging negative electrode active material according to the first aspect of the present application or a fast-charging negative electrode active material prepared by the method according to the second aspect of the present application. For example, the negative electrode current collector has two surfaces opposite to each other in the direction of its own thickness, and the negative electrode film is provided on either or both of two opposite surfaces of the negative electrode current collector.

In some embodiments, the negative electrode film may further comprise other negative electrode active materials known in the art for secondary batteries. As an example, the other negative electrode active material comprises one or more selected from natural graphite, artificial graphite, soft carbon, hard carbon, silicon-based materials, tin-based materials, and lithium titanate. The silicon-based material may comprise one or more selected from elemental silicon, a silicon oxide, a silicon carbon composite, a silicon nitrogen composite, and a silicon alloy material. The tin-based material may comprise one or more selected from elemental tin, a tin oxide, and a tin alloy material.

In some embodiments, the negative electrode film optionally further comprises a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film, the negative electrode conductive agent is present in a mass percentage of 5% or less.

In some embodiments, the negative electrode film may further optionally comprise a negative electrode binder. There is no particular limitation on the type of the negative electrode binder in the present application. As an example, the negative electrode binder may comprise one or more of styrene butadiene rubber (SBR), water-soluble unsaturated resin SR-1B, water-based acrylic resin (such as polyacrylic acid PAA, polymethacrylic acid PMAA, and polyacrylic acid sodium PAAS), polyacrylamide (PAM), polyvinyl alcohol (PVA), sodium alginate (SA), and carboxymethyl chitosan (CMCS). In some embodiments, based on a total mass of the negative electrode film, the negative electrode binder is present in a mass percentage of 5% or less.

In some embodiments, the negative electrode film may further optionally comprise other auxiliaries. As an example, the other auxiliaries may comprise a thickener, such as carboxymethyl cellulose sodium (CMC-Na) or a PTC thermistor material. In some embodiments, based on the total mass of the negative electrode film, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode film is usually formed by applying a negative electrode slurry on a negative electrode current collector, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate of the present application does not exclude other additional functional layers than the negative electrode film. For example, in some embodiments, the negative electrode plate described in the present application further comprises a conductive primer (e.g. being composed of a conductive agent and a binder) sandwiched between the negative electrode current collector and the negative electrode film and disposed on the surface of the negative electrode current collector. In some other embodiments, the negative electrode plate described in the present application further comprises a protective layer covering the surface of the negative electrode film.

### Secondary battery

The fourth aspect of the present application provides a secondary battery comprising the negative electrode plate according to the third aspect of the present application.

Secondary batteries, also known as a rechargeable battery or a storage battery, are batteries that can be recharged after discharge to activate the active material and continue to be used. The secondary battery of the present application includes an electrode assembly and an electrolyte. Typically, an electrode assembly comprises a positive electrode plate, a negative electrode plate, and a separator. The separator is disposed between the positive electrode plate and the negative electrode plate, which mainly functions to prevent short circuit of the positive and negative electrodes and at the same time allowing active ions to pass through. The electrolyte functions as conducting active ions between the positive electrode plate and the negative electrode plate. The secondary battery of the present application may be a lithium-containing secondary battery, especially a lithium-ion secondary battery.

### [Negative electrode plate]

The negative electrode plate used in the secondary battery of the present application is the negative electrode plate according to the third aspect of the present application.

### [Positive electrode plate]

In some embodiments, the positive electrode plate comprises a positive electrode current collector and a positive electrode film provided on at least one surface of the positive electrode current collector. For example, the positive electrode current collector has two surfaces opposite to each other in the direction of its own thickness, and the positive electrode film is provided on either or both of two opposite surfaces of the positive electrode current collector.

The positive electrode film comprises a positive electrode active material. The positive electrode active material may be a positive electrode active material known in the art for use in secondary batteries. For example, the positive electrode active material may comprise at least one of a lithium transition metal oxide, a lithium-containing phosphate with an olivine structure, and their respective modified compounds. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, and modified compounds thereof. Examples of lithium-containing phosphates with an olivine structure may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, and their respective modified compounds.

In some embodiments, in order to further increase the energy density of the secondary battery, the positive electrode active material for the lithium-ion battery may include at least one of the lithium transition metal oxides shown in Formula 1 and modified compounds thereof,

LiₐNi_{b}Co_{c}M_{d}OₑA_{f} Formula 1

in which 0.8 ≤ a ≤ 1.2, 0.5 ≤ b < 1, 0 < c < 1, 0 < d < 1, 1 ≤ e ≤ 2, 0 ≤ f ≤ 1, M is selected from at least one of Mn, Al, Zr, Zn, Cu, Cr, Mg, Fe, V, Ti, and B, and A is selected from at least one of N, F, S, and Cl.

In the present application, the modified compounds of the foregoing positive electrode active materials may undergo doping modification and/or surface coating modification of the positive electrode active materials.

In some embodiments, the positive electrode film may optionally comprise a positive electrode conductive agent. There is no particular limitation on the type of the positive electrode conductive agent in the present application. As an example, the positive electrode conductive agent may include one or more selected from superconducting carbon, conductive graphite, acetylene black, carbon black, Ketjen black, carbon dots, carbon nanotubes, graphene, and carbon nanofibers. In some embodiments, based on a total mass of the positive electrode film, the positive electrode conductive agent is present in a mass percentage of 5% or less.

In some embodiments, the positive electrode film may optionally comprise a positive electrode binder. There is no particular limitation on the type of the positive electrode binder in the present application. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film, the positive electrode binder is present in a mass percentage of 5% or less.

In some embodiments, the positive electrode current collector may be a metal foil or composite current collector. As an example of the metal foil, an aluminum foil or aluminum alloy foil may be used. The composite current collector may include a polymer material base layer and a metal material layer formed on at least one surface of the polymer material base layer. As an example, the metal material may include one or more selected from aluminum, aluminum alloy, nickel, nickel alloy, titanium, titanium alloy, silver, and silver alloy. The polymer material base layer may include one or more selected from polypropylene (PP), polyethylene terephthalate (PET), polybutylene terephthalate (PBT), polystyrene (PS), and polyethylene (PE).

The positive electrode film is usually formed by coating a positive electrode current collector with a positive electrode slurry, drying, and cold pressing. The positive electrode slurry is usually formed by dispersing a positive electrode active material, a conductive agent, a binder, and any other components in a solvent and stirring evenly. The solvent may be N-methylpyrrolidone (NMP), but is not limited thereto.

### [Electrolyte]

The electrolyte of the present application may be an electrolyte known in the art for use in secondary batteries. The electrolyte comprises a lithium salt and an organic solvent.

As an example, the lithium salt may include one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

As an example, the organic solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethylsulfonylethane (ESE).

### [Separator]

There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as at least one of polypropylene (PP), polybutylene terephthalate (PBT), and polybutylene succinate (PBS).

The shape of the secondary battery is not particularly limited in the present application, and it may be cylindrical, square, rectangular or any other shape. FIG. 2 is a schematic diagram of a secondary battery 5 of a rectangular structure as an example.

In some embodiments, as shown in FIG. 3, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

A method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

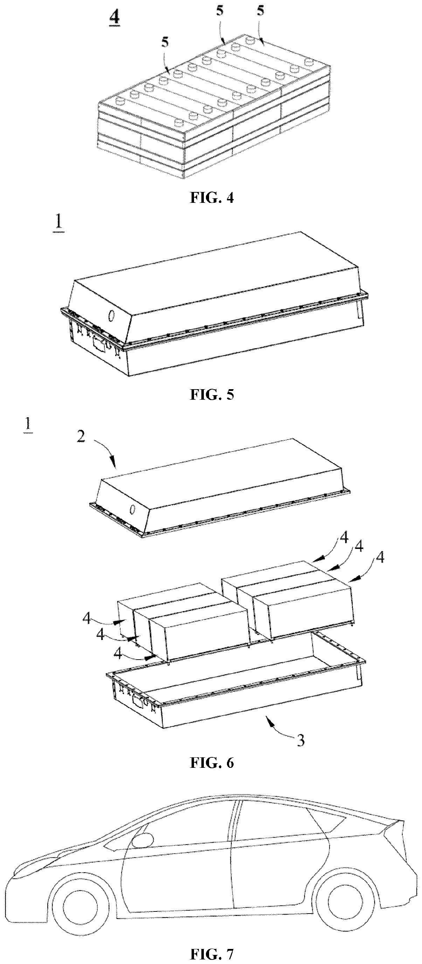

FIG. 4 is a schematic diagram of the battery module 4 as an example. As shown in FIG. 4, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

FIGS. 5 and 6 are schematic diagrams of the battery pack 1 as an example. As shown in FIGS. 5 and 6, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 7 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### Step (1): Preparation of negative electrode active material

S 10: petroleum residual oil was subjected to delayed coking at a temperature of 490°C-510°C to obtain petroleum non-needle coke raw coke; the raw coke was crushed, shaped, and graded to obtain coke powder; the obtained coke powder was mixed with binder coal asphalt, and then granulation was carried out; the obtained granulated product was placed in a graphite crucible. The graphite crucible was then placed in the Atchison graphitization furnace, and around the graphite crucible a resistive material was filled in, through which the electric current flew after power-on to generate heat energy so that the graphitization proceeded at about 3000°C for about 30h to obtain artificial graphite particles. The artificial graphite particles had a volume average particle size Dv50 of about 9.8 µm and a graphitization degree of about 92%.

S20: the obtained artificial graphite particles were uniformly mixed with a carbon source petroleum asphalt (added amount in terms of residual carbon value), a ferroelectric material BaTiO₃ (volume average particle size Dv50 of 200 nm, dielectric constant of 2000) according to a mass ratio of 100:3:3 and then subjected to a carbonation-sintering treatment in an orbital kiln, with a temperature of the highest temperature zone of about 1150°C, and an operation time of about 12h to form an amorphous carbon cladding layer on at least a portion of the surface of the artificial graphite particles to obtain a negative electrode active material. In the obtained negative electrode active material, BaTiO₃ was dispersed in the cladding layer and at least a portion of BaTiO₃ protruded from the surface of the cladding layer.

### Step (2): Preparation of the negative electrode plate

The negative electrode active material prepared above was mixed with the binder styrene-butadiene rubber (SBR), the thickener sodium carboxymethyl cellulose (CMC-Na), and the conductive agent carbon black in the appropriate amount of solvent deionized water at a mass ratio of 96.8:1.2:1.2:0.8 with thorough stirring, and then a homogeneous negative electrode slurry was formed; the negative electrode slurry was uniformly applied on the surface of the negative electrode current collector copper foil, and then the negative electrode plate was obtained after being dried, cold pressed. The coating amount was 0.162 kg/m², and the compaction density was 1.65 g/cm³.

### Step (3): Preparation of positive electrode plate

The positive electrode active material LiNi_{0.5}Co_{0.2}Mn_{0.3}O₂ (NCM523), the conductive agent carbon black, and the binder polyvinylidene fluoride (PVDF) were fully stirred and mixed in an appropriate amount of the solvent NMP at a mass ratio of 96.2:1.8:2 to form a homogeneous positive electrode slurry; and the positive electrode slurry was uniformly applied on the surface of the positive electrode current collector aluminum foil. After being dried and cold pressed, the positive electrode plate was obtained. The coating amount was 0.256 kg/m², and the compaction density was 3.4 g/cm³.

### Step (4): Preparation of electrolyte

Ethylene carbonate (EC), ethyl methyl carbonate (EMC), and diethyl carbonate (DEC) were mixed at a volume ratio of 1:1:1 to obtain an organic solvent, and then LiPF₆, which was sufficiently dried, was dissolved in the abovementioned organic solvent to formulate the electrolyte with a concentration of 1 mol/L.

### Step (5): Preparation of separator

A porous polyethylene membrane was used as the separator.

### Step (6): Preparation of secondary battery

The positive electrode plate, the separator, and the negative electrode plate were stacked and wound in sequence to obtain an electrode assembly; the electrode assembly was placed in the outer package, dried and injected with electrolyte, and the secondary battery was obtained after vacuum encapsulation, resting, chemical formation, shaping, and other processes.

### Examples 2 to 16

The secondary batteries of Examples 2 to 16 were prepared by a method similar to that of Example 1, with the difference that the relevant parameters in the "preparation of the negative electrode active material" were adjusted, and the specific parameters were detailed in Table 2.

### Comparative Example 1

The secondary battery of Comparative Example 1 was prepared by a method similar to that of Example 1, except that conventional artificial graphite without a cladding layer was used as the negative electrode active material. Specifically, the artificial graphite was prepared according to the following method.

Petroleum residual oil was subjected to delayed coking at a temperature of 490°C-510°C to obtain petroleum non-needle coke raw coke; the raw coke was crushed, shaped, and graded to obtain coke powder; the obtained coke powder was mixed with binder coal asphalt, and then granulation was carried out; the obtained granulated product was placed in a graphite crucible. The graphite crucible was then placed in the Atchison graphitization furnace, and around the graphite crucible a resistive material was filled in, through which the electric current flew after power-on to generate heat energy, so that the graphitization proceeded at about 3000°C for about 30h to obtain artificial graphite particles. The artificial graphite particles had a volume average particle size Dv50 of about 9.8 µm and a graphitization degree of about 92%.

### Comparative Example 2

The secondary battery of Comparative Example 2 was prepared by a method similar to that of Example 1, except that the negative electrode active material was prepared according to the following method.

S10: petroleum residual oil was subj ected to delayed coking at a temperature of 490°C-510°C to obtain petroleum non-needle coke raw coke; the raw coke was crushed, shaped, and graded to obtain coke powder; the obtained coke powder was mixed with binder coal asphalt, and then granulation was carried out; the obtained granulated product was placed in a graphite crucible. The graphite crucible was then placed in the Atchison graphitization furnace, and around the graphite crucible a resistive material was filled in, through which the electric current flew after power-on to generate heat energy, so that the graphitization proceeded at about 3000°C for about 30h to obtain artificial graphite particles. The artificial graphite particles had a volume average particle size Dv50 of about 9.8 µm and a graphitization degree of about 92%.

S20: the obtained artificial graphite particles were uniformly mixed with a carbon source petroleum asphalt and then subjected to a carbonation-sintering treatment in an orbital kiln, with a temperature of the highest temperature zone of about 1150°C, and an operation time of about 12h to form an amorphous carbon cladding layer on at least a portion of the surface of the artificial graphite particles to obtain the negative electrode active material.

### Comparative Example 3

The secondary battery of Comparative Example 3 was prepared by a method similar to that of Example 1, except that the negative electrode active material and the negative electrode plate were prepared according to the following method.

### Step (1): Preparation of negative electrode active material

S10: petroleum residual oil was subj ected to delayed coking at a temperature of 490°C-510°C to obtain petroleum non-needle coke raw coke; the raw coke was crushed, shaped, and graded to obtain coke powder; the obtained coke powder was mixed with binder coal asphalt, and then granulation was carried out; the obtained granulated product was placed in a graphite crucible. The graphite crucible was then placed in the Atchison graphitization furnace, and around the graphite crucible a resistive material was filled in, through which the electric current flew after power-on to generate heat energy, so that the graphitization proceeded 3000°C for about 30h to obtain artificial graphite particles. The artificial graphite particles had a volume average particle size Dv50 of about 9.8 µm and a graphitization degree of about 92%.

S20: the obtained artificial graphite particles were uniformly mixed with a carbon source petroleum asphalt and then subjected to a carbonation-sintering treatment in an orbital kiln, with a temperature of the highest temperature zone of about 1150°C, and an operation time of about 12h to form an amorphous carbon cladding layer on at least a portion of the surface of the artificial graphite particles to obtain the negative electrode active material.

### Step (2): Preparation of negative electrode plate

The negative electrode active material prepared above, the ferroelectric material BaTiO₃ (volume average particle size Dv50 of 85 nm), the binder styrene-butadiene rubber (SBR), the thickener sodium carboxymethyl cellulose (CMC-Na), and the conductive agent carbon black were fully mixed under stirring at a mass ratio of 93.8:3:1.2:1.2:0.8 in an appropriate amount of solvent deionized water to form a homogeneous negative electrode slurry. The negative electrode slurry was uniformly applied on the surface of the negative electrode current collector copper foil, and the negative electrode plate was obtained after being dried and cold pressed.

### Comparative Example 4

The secondary battery of Comparative Example 4 was prepared by a method similar to that of Example 1, except that the negative electrode active material was prepared according to the following method.

S10: petroleum residual oil was subj ected to delayed coking at a temperature of 490°C-510°C to obtain petroleum non-needle coke raw coke; the raw coke was crushed, shaped, and graded to obtain coke powder; the obtained coke powder was mixed with binder coal asphalt, and then granulation was carried out; the obtained granulated product was placed in a graphite crucible. The graphite crucible was then placed in the Atchison graphitization furnace, and around the graphite crucible a resistive material was filled in, through which the electric current flew after power-on to generate heat energy, so that the graphitization proceeded at about 3000°C for about 30h to obtain artificial graphite particles. The artificial graphite particles had a volume average particle size Dv50 of about 9.8 µm and a graphitization degree of about 92%.

S20: the obtained artificial graphite particles were uniformly mixed with a carbon source petroleum asphalt and then subjected to a carbonation-sintering treatment in an orbital kiln, with a temperature of the highest temperature zone of about 1150°C, and an operation time of about 12h to form an amorphous carbon cladding layer on at least a portion of the surface of the artificial graphite particles.

S30: the obtained artificial graphite particles having an amorphous carbon cladding layer and the ferroelectric material BaTiO₃ (with a volume average particle size Dv50 of 85 nm) were ball-milled and homogeneously mixed at a mass ratio of 97:3, and then put into a planetary ball mill, and taken out after ball-milling for 2h at an ambient temperature of 25°C and a rotational speed of 300 rpm, to obtain the negative electrode active material.

### Test section

### (1) Test for volume average particle size Dv50

A certain amount of the negative electrode active material sample prepared above was taken, and the volume average particle size Dv50 was tested by a Mastersizer 2000E laser particle size analyzer. The test standard was based on GB/T 19077-2016.

### (2) Test for specific surface area

A certain amount of the negative electrode active material samples prepared above was taken and the specific surface area was tested by a Tri-Star 3020 type specific surface area pore size analysis tester from Micromeritics, USA. The specific surface area was calculated by BET (Brunauer Emmett Teller) method. The testing standard was based on GB/T 19587-2017.

### (3) Test for powder compaction density

A certain amount of the negative electrode active material sample prepared above was taken and added into a mold with a base area of 1.327 cm² of a UTM7305 electronic pressure tester, to which the pressure of 2000 kg (equivalent to 20,000 N) was applied and held for 30 s, and then unloaded to let the material stand for 10 s. Then, the powder compaction density of the negative electrode active material under the force of 20,000 N was recorded and calculated. The test standard was based on GB/T24533-2009.

### (4) Test for graphitization degree

A certain amount of the above-prepared negative electrode active material sample was taken and tested using a Bruker D8 Discover X-ray diffractometer to obtain the layer spacing d₀₀₂ of the cladding layer and the (002) crystalline plane of the carbon-based material particles, respectively, and then the graphitization degree of the cladding layer was calculated according to the formula g=(0.344-d₀₀₂)/(0.344-0.3354)×100%, to obtain the graphitization degree of the cladding layer g₁ and the graphitization degree of the particles of the carbon-based material g₂. The test standards were based on JIS K 0131-1996 and JB/T 4220-2011.

### (5) Testing for average thickness of the cladding layer

A certain amount of the negative electrode active material samples prepared above was taken, and a thin slice of about 100 nm was cut from the middle of a single particle, and then the thin slice was analyzed and tested by transmission electron microscope to obtain a TEM picture, and then the thickness of a plurality of (e.g., more than 5) different positions on the TEM picture was measured, and at least 6 negative electrode active material samples was tested, taking the average value of the test results as the average thickness of the cladding layer.

### (6) Test for initial specific capacity

The negative electrode active material prepared above, the conductive agent carbon black, and the binder polyvinylidene fluoride (PVDF) were mixed with the solvent N-methyl pyrrolidone (NMP) at a mass ratio of 91.6:1.8:6.6, to obtain a slurry; the prepared slurry was applied on the copper foil, and then the slurry was dried in the oven for use; and after that, the lithium metal sheet was used as the counter electrode, and polyethylene (PE) film was used as the separator, and a few drops of the same electrolyte as the secondary battery described above were added, and a CR2430-type button cell was assembled in an argon-gas-protected glove box.

After the resulting button battery was left to stand for 12h, it was discharged to 0.005V at a constant current of 0.05C at 25°C, left to stand for 10min, discharged to 0.005V at a constant current of 50µA again, left to stand for 10min, and discharged to 0.005V at a constant current of 10µA again; and then it was charged to 2V at a constant current of 0.1C, and the charging capacity was recorded. The ratio of the charging capacity to the mass of the negative electrode active material was the initial specific capacity of the negative electrode active material.

### (7) Test for fast-charging performance of secondary battery

At 25°C, the secondary battery prepared above was charged at 0.33C constant current to a charging cutoff voltage of 4.4V, after which it was charged at constant voltage to a current of 0.05C, left to stand for 5min, and then discharged at 0.33C constant current to a discharging cutoff voltage of 2.8V, and the actual capacity was recorded as C0.

Then the secondary battery was sequentially charged at constant current of 0.5C0, 1C0, 1.5C0, 2C0, 2.5C0, 3C0, 3.5C0, 4C0, 4.5C0 to a full battery charging cutoff voltage of 4.4V or negative cutoff potential of 0V (whichever was reached first), and each time the charging was completed it was required to be discharged to the full battery discharging cutoff voltage of 2.8V at 1C0. The negative electrode potentials corresponding to 10%, 20%, 30% ......80% SOC (State of Charge) at different charging rates were recorded, and the rate vs. negative electrode potential curves were potted for different SOC states. After linear fitting, the charging rates when the negative electrode potential was 0V for different SOC states were obtained, and the charging rates were the charging windows for the respective SOC states, which were recorded as C10%SOC, C20%SOC, C30%SOC, C40%SOC, C50%SOC, C60%SOC, C70%SOC, and C80%SOC, respectively. SOC + 60/C50%SOC + 60/C60%SOC + 60/C70%SOC + 60/C80%SOC) × 10% was calculated to obtain a charging time T for charging this secondary battery from 10% SOC to 80% SOC. The shorter charging time T represents the better the fast-charging performance of the secondary battery.

### (8) Test for cycle performance

At 25°C, the secondary battery prepared as described above was charged at a constant current of 0.33C to a charging cutoff voltage of 4.4 V, after which it was charged at a constant voltage to a current of 0.05 C, and left to stand for 5 min, and then discharged at a constant current of 0.33C to a discharging cutoff voltage of 2.8 V, and the initial capacity was recorded as C0. The secondary battery was then charged in accordance with the strategy shown in Table 1, and discharged at 0.33C, and the discharging capacity Cn was recorded for each cycle of the discharging capacity Cn until the cycle capacity retention rate (i.e., Cn/C0×100%) was 80%, and the number of the cycles was recorded. The more the number of the cycles was, the better the cycle performance of the secondary battery was.

**Table 1**

| State of Charge SOC of secondary battery | Rate of charge (C) |
|---|---|
| 0 - 10% | 0.33 |
| 10% - 20% | 5.2 |
| 20% - 30% | 4.5 |
| 30% - 40% | 4.2 |
| 40% - 50% | 3.3 |
| 50% - 60% | 2.6 |
| 60% - 70% | 2.0 |
| 70% - 80% | 1.5 |
| 80% - 100% | 0.33 |

Table 2 shown the preparation parameters for the negative electrode active materials of Examples 1 to 16.

Table 3 shown the test results obtained for Examples 1 to 16 and Comparative Examples 1 to 4 in accordance with the performance test methods described above.

**Table 2**

| No. | Carbon-based material particles | | | Cladding layer | | Ferroelectric material | | | Mass ratio of the ferroelectric material to the carbon-based material particles α₁ | Mass ratio of the cladding layer to the carbon-based material particles α₂ | α₁:α₂ |
|---|---|---|---|---|---|---|---|---|---|---|---|
| | Type | Volume-averaged particle size Dv50 (µm) | Graphitization degree g₂ | Average thickness H (nm) | Graphitization degree g₁ | Type | Dielectric constant | Volume-averaged particle size d₁ (nm) | | | |
| Example 1 | Artificial graphite | 9.8 | 92% | 30 | 55% | BaTiO₃ | 2000 | 200 | 3:100 | 3:100 | 1:1 |
| Example 2 | Artificial graphite | 9.8 | 92% | 30 | 55% | BaTiO₃ | 2000 | 120 | 3:100 | 3:100 | 1:1 |
| Example 3 | Artificial graphite | 9.8 | 92% | 30 | 55% | BaTiO₃ | 2000 | 85 | 3:100 | 3:100 | 1:1 |
| Example 4 | Artificial graphite | 9.8 | 92% | 30 | 55% | BaTiO₃ | 2000 | 60 | 3:100 | 3:100 | 1:1 |
| Example 5 | Artificial graphite | 9.8 | 92% | 30 | 55% | BaTiO₃ | 2000 | 35 | 3:100 | 3:100 | 1:1 |
| Example 6 | Artificial graphite | 9.8 | 92% | 30 | 55% | BaTiO₃ | 2000 | 85 | 0.2:100 | 3:100 | 1:15 |
| Example 7 | Artificial graphite | 9.8 | 92% | 30 | 55% | BaTiO₃ | 2000 | 85 | 0.5:100 | 3:100 | 1:6 |
| Example 8 | Artificial graphite | 9.8 | 92% | 30 | 55% | BaTiO₃ | 2000 | 85 | 1:100 | 3:100 | 1:3 |
| Example 9 | Artificial graphite | 9.8 | 92% | 30 | 55% | BaTiO₃ | 2000 | 85 | 5:100 | 3:100 | 1.67:1 |
| Example 10 | Artificial graphite | 9.8 | 92% | 30 | 55% | BaTiO₃ | 2000 | 85 | 10:100 | 3:100 | 3.33:1 |
| Example 11 | Artificial graphite | 9.8 | 92% | 30 | 55% | BaTiO₃ | 2000 | 85 | 15:100 | 3:100 | 5:1 |
| Example 12 | Artificial graphite | 9.8 | 92% | 12 | 55% | BaTiO₃ | 2000 | 85 | 3:100 | 1:100 | 3:1 |
| Example 13 | Artificial graphite | 9.8 | 92% | 21 | 55% | BaTiO₃ | 2000 | 85 | 3:100 | 2:100 | 1.50:1 |
| Example 14 | Artificial graphite | 9.8 | 92% | 48 | 55% | BaTiO₃ | 2000 | 85 | 3:100 | 5:100 | 1:1.67 |
| Example 15 | Artificial graphite | 9.8 | 92% | 90 | 55% | BaTiO₃ | 2000 | 85 | 3:100 | 10:100 | 1:3.33 |
| Example 16 | Artificial graphite | 9.8 | 92% | 140 | 55% | BaTiO₃ | 2000 | 85 | 3:100 | 15:100 | 1:5 |

**Table 3**

| No. | Negative electrode active material | | | | | | Performance of secondary battery | |
|---|---|---|---|---|---|---|---|---|
| | H/d₁ | Volume-averaged particle size Dv50(µm) | Specific surface area (m²/g) | Powder compaction density (g/cm³) | Initial specific capacity (mAh/g) | Initial coulombic efficiency | Charging time T(min) | Number of cycles |
| Example 1 | 0.15 | 10.50 | 0.90 | 1.60 | 340.0 | 94.0% | 200 | 1550 |
| Example 2 | 0.25 | 10.30 | 0.95 | 1.61 | 340.0 | 94.0% | 19.2 | 1650 |
| Example 3 | 0.35 | 10.20 | 1.00 | 1.63 | 340.0 | 94.0% | 18.1 | 1700 |
| Example 4 | 0.50 | 10.15 | 1.10 | 1.64 | 340.0 | 94.0% | 18.9 | 1800 |
| Example 5 | 0.85 | 10.10 | 1.15 | 1.65 | 340.0 | 94.0% | 20.5 | 1580 |
| Example 6 | 0.35 | 10.00 | 0.86 | 1.53 | 349.8 | 94.3% | 20.5 | 1500 |
| Example 7 | 0.35 | 10.10 | 0.90 | 1.54 | 348.8 | 94.3% | 19.5 | 1600 |
| Example 8 | 0.35 | 10.15 | 0.93 | 1.57 | 347.0 | 94.2% | 18.8 | 1650 |
| Example 9 | 0.35 | 10.50 | 1.15 | 1.74 | 333.0 | 93.5% | 18.0 | 1630 |
| Example 10 | 0.35 | 10.80 | 1.20 | 1.90 | 315.5 | 93.0% | 18.5 | 1600 |
| Example 11 | 0.35 | 11.00 | 1.30 | 2.10 | 298.0 | 92.0% | 21.0 | 1450 |
| Example 12 | 0.14 | 9.90 | 1.09 | 1.65 | 342.0 | 94.2% | 200 | 1600 |
| Example 13 | 0.25 | 10.00 | 1.05 | 1.63 | 340.0 | 94.0% | 19.0 | 1700 |
| Example 14 | 0.56 | 10.20 | 0.84 | 1.60 | 338.0 | 93.0% | 17.8 | 1650 |
| Example 15 | 1.06 | 10.60 | 0.80 | 1.50 | 334.0 | 92.0% | 17.5 | 1600 |
| Example 16 | 1.65 | 11.00 | 0.75 | 1.40 | 330.0 | 90.5% | 17.0 | 1400 |
| Comparative Example 1 | / | 9.80 | 1.20 | 1.70 | 354.0 | 95.0% | 25.0 | 800 |
| Comparative Example 2 | / | 10.00 | 0.90 | 1.63 | 350.0 | 94.0% | 22.0 | 1300 |
| Comparative Example 3 | / | 10.00 | 0.90 | 1.63 | 350.0 | 94.0% | 21.5 | 1400 |
| Comparative Example 4 | / | 10.00 | 1.40 | 1.72 | 342.0 | 94.7% | 24.0 | 1200 |

As can be seen from the test results in Table 3, the negative electrode active material of the present application had good dynamic performance, which can shorten the fast-charging time of the secondary battery and prolong the cycle life of the secondary battery without sacrificing the high specific capacity of the negative electrode active material.

Compared with Comparative Example 1, Example 2 used amorphous carbon coated artificial graphite as the negative electrode active material, which can improve the fast-charging performance and the cycle performance of the secondary battery to a certain extent, but the improvement effect was limited, and it cannot satisfy people's requirements for higher fast-charging capability and longer cycle life of the secondary battery.

Compared with Comparative Example 2, Example 3 further added a ferroelectric material to the negative electrode slurry, which can further improve the fast-charging performance and the cycle performance of the secondary battery, but the improvement effect was limited, and cannot meet people's requirements for higher fast-charging capability and longer cycle life of the secondary battery. A possible reason for this was that adding the ferroelectric material by physical mixing in the negative electrode slurry, on the one hand, due to the high density of the ferroelectric material, it was easy to settle in the negative electrode slurry, which makes it difficult to form a stable negative electrode slurry and affects the production rate and the quality of the negative electrode plate; on the other hand, the addition of the ferroelectric material by means of physical mixing results in the lack of physical contact between some of the ferroelectric material and the negative electrode active material in the negative electrode plate, which will not be able to utilize the function of the ferroelectric material and thus result in a limited improvement in the fast-charging performance and cycle performance of the secondary battery.

Compared with Comparative Example 1, Example 4 adopted barium titanate-coated artificial graphite as the negative electrode active material, but the negative electrode active material was obtained by the direct ball milling method, which improved the fast-charging performance and the cycle performance of the secondary battery to a certain extent over Comparative Example 1, but the improvement effect was limited and insufficient to satisfy people's requirements for higher fast-charging capability and longer cycle life of the secondary battery. The possible reason for this is that, on the one hand, the direct ball milling method compounds artificial graphite particles and ferroelectric material particles together to form the negative electrode active material by impacting and milling the two particles, but the high-energy ball milling destroys the morphology of the artificial graphite particles that have been tailored, which may result in falling off of the amorphous carbon coating layer on the surface, thus affecting the fast-charging performance of the negative electrode active material; on the other hand, the destruction of the surface of the negative electrode active material will further cause the electrolyte (especially the solvent) to intercalate in the negative electrode active material, increasing the irreversible consumption of active lithium ions, and thus reducing the cycle performance of the secondary battery.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

1. A fast-charging negative electrode active material comprising carbon-based material particles, a cladding layer disposed on at least a portion of the surface of the carbon-based material particles, and ferroelectric material dispersed in the cladding layer, wherein the cladding layer comprises a conductive carbon material, and at least a portion of the ferroelectric material projects from the surface of the cladding layer.

2. The fast-charging negative electrode active material according to claim 1, wherein the cladding layer has an average thickness of H nm, the ferroelectric material has a volume-averaged particle size Dv50 of d₁ nm, and the fast-charging negative electrode active material satisfies: 0.25 ≤ H/d₁ ≤ 1.1, optionally, 0.25 ≤ H/d₁ ≤ 0.5.

3. The fast-charging negative electrode active material according to claim 1 or 2, wherein the ferroelectric material has a volume-averaged particle size Dv50 of d₁ nm, 0 < d₁ ≤ 200, optionally, 0 < d₁ ≤ 100, and/or
wherein the cladding layer has an average thickness of H nm, 20 ≤ H ≤ 100, optionally, 20 ≤ H ≤ 50.

4. The fast-charging negative electrode active material according to any of claims 1 to 3, wherein a mass ratio of the ferroelectric material to the carbon-based material particles is α₁, α₁ being (0.5-10): 100, optionally (1-3): 100, and/or
wherein a mass ratio of the cladding layer to the carbon-based material particles is α₂, α₂ being (2-10): 100, optionally (2-5): 100.

5. The fast-charging negative electrode active material according to any of claims 1 to 4, wherein a mass ratio of the ferroelectric material to the carbon-based material particles is α₁, a mass ratio of the cladding layer to the carbon-based material particles is α₂, and α₁:α₂ is from 1:6 to 4:1, optionally from 1:4 to 2:1.

6. The fast-charging negative electrode active material according to any claims 1 to 5, wherein the cladding layer has a graphitization degree of 45% to 80%; and/or
wherein the carbon-based material particles have a graphitization degree of 88% to 96%.

7. The fast-charging negative electrode active material according to any of claims 1 to 6, wherein the carbon-based material particles have a volume-averaged particle size Dv50 of d₂ µm, 5 ≤ d₂ ≤ 20, optionally 8 ≤ d₂ ≤ 15.

8. The fast-charging negative electrode active material according to any of claims 1 to 7, wherein the carbon-based material particles are in the form of primary particles, secondary particles or a combination thereof;
optionally, in the carbon-based material particles in the form of secondary particles, the ratio of the volume-averaged particle size Dv50 of the primary particles to the volume-averaged particle size Dv50 of the secondary particles composed of the primary particles is from 0.2 to 0.5.

9. The fast-charging negative electrode active material according to any of claims 1 to 8, wherein the ferroelectric material has a dielectric constant of from 100 or more, optionally from 100 to 100,000; and/or
wherein the ferroelectric material has a Curie temperature of 80°C or more.

10. The fast-charging negative electrode active material according to any of claims 1 to 9, wherein the carbon-based material particles comprise one or more selected from graphite, mesocarbon microbeads, hard carbon, and soft carbon, optionally selected from graphite; and/or
wherein the conductive carbon material in the cladding layer comprises amorphous carbon, optionally hard carbon; and/or
wherein the ferroelectric material comprises one or more selected from a perovskite structured oxide, a tungsten-bronze compound, a bismuth oxide layered compound, lithium niobate, and lithium tantalite.

11. The fast-charging negative electrode active material according to any of claims 1 to 10, wherein the fast-charging negative electrode active material satisfies at least one of the following conditions (1) to (3):
(1) the fast-charging negative electrode active material has a volume-averaged particle size Dv50 of from 5 µm to 20 µm, optionally from 8 µm to 15 µm;
(2) the fast-charging negative electrode active material has a specific surface area of from 0.8 m²/g to 1.3 m²/g, optionally from 0.9 m²/g to 1.2 m²/g;
(3) the fast-charging negative electrode active material has a powder compaction density under a force of 20,000 N of from 1.5 g/cm³ to 1.9 g/cm³, optionally from 1.5 g/cm³ to 1.7 g/cm³.

12. A method for preparing a fast-charging negative electrode active material, comprising the following steps:
S10, providing carbon-based material particles, a carbon source, and a ferroelectric material, optionally wherein the carbon source comprises one or more selected from asphalt, resin, and biomass material;
S20, homogeneously mixing the carbon-based material particles, the carbon source, and the ferroelectric material, and subjecting to a carbonization sintering process to form a cladding layer comprising electrically conductive carbon material on at least a portion of the surface of the carbon-based material particles, wherein the ferroelectric material is dispersed in the cladding layer and wherein at least a portion of the ferroelectric material protrudes from the surface of the cladding layer.

13. The method according to claim 12, wherein,
the carbonization sintering temperature in S20 is from 700°C to 1800°C, optionally from 1000°C to 1300°C; and/or
the carbonization sintering time in S20 is from 1h to 15h, optionally from 6h to 14h.

14. The method according to claim 12 or 13, wherein the carbon-based material particles are prepared by the following method:
S101, providing coke powder, and placing the coke powder into a reaction vessel;
S 102, graphitizing the coke powder to obtain the carbon-based material particles.

15. A negative electrode plate comprising a negative electrode current collector and a negative electrode film provided on at least one surface of the negative electrode current collector, wherein the negative electrode film comprises the fast-charging negative electrode active material according to any of claims 1-11 or the fast-charging negative electrode active material prepared by the method according to any of claims 12-14.

16. A secondary battery comprising the negative electrode plate according to claim 15.

17. An electrical device comprising the secondary battery according to claim 16.
